# EUROPEAN PATENT SPECIFICATION

(11) **EP 4 649 781 B1**
(45) Date of publication and mention of the grant of the patent: **01.07.2026**
(21) Application number: 24700260.3
(22) Date of filing: 09.01.2024
(51) Int. Cl.: H05B 45/50, H05B 45/24

(54) **HOT SWAPPING PROTECTION CIRCUIT FOR LIGHTING PRODUCTS**
HOT-SWAPPING-SCHUTZSCHALTUNG FÜR BELEUCHTUNGSPRODUKTE
CIRCUIT DE PROTECTION CONTRE L'ÉCHANGE À CHAUD POUR PRODUITS D'ÉCLAIRAGE

(30) Priority: 12.01.2023 EP 23151235
(43) Date of publication of application: 19.11.2025
(73) Proprietor: Signify Holding B.V., 5656 AE Eindhoven (NL)
(72) Inventor: ARULANDU, Karnekumar, 5656 AE Eindhoven (NL); TAO, Haimin, 5656 AE Eindhoven (NL)
(74) Representative: Verweij, Petronella Daniëlle
(86) International application number: PCT/EP2024/050379
(87) International publication number: WO 2024/149746

(56) References cited:
- WO-A1-2011/058805
- US-A1- 2021 243 863
- US-B2- 9 306 387

## Description

### FIELD OF THE INVENTION

The invention relates to a protection circuit. The invention further relates to a driver. The invention further relates to a lighting system.

### BACKGROUND OF THE INVENTION

Lighting systems can be divided into several components. These components may break down and may need to be replaced. For a circular economy it is desired that all components can be replaced without having to replace components that are not defect. A lighting system may have a driver that is arranged to provide a regulated power, i.e. a regulated voltage and/or current to a load. The lighting system also has the load, which may be a lighting load. the lighting load is normally a separate module that may be placed on a single printed circuit board, PCB. This PCB with the lighting load may need to be replaced without having to replace the driver.

Even though it is recommended to power down a lighting system prior to applying maintenance on the lighting system, it is a common practice to carry out maintenance on powered lighting systems. Especially on lighting systems that use Safety Extra Low Voltage (SELV) drivers, it is convenient to do maintenance tasks without powering down the system. Not all drivers and lighting loads can cope with 'hot swapping' of e.g., LED boards i.e., exchanging an LED board on a LED driver that remains powered on. When the LED board is removed from the powered LED driver, the output voltage of the LED driver will rise to the maximum limit of the LED driver for non-SELV LED drivers this may be a few hundreds of volts, and for SELV drivers this may be lower than the SELV limit (60Vdc). Reconnecting a LED board to a driver that operates at its maximum output voltage results into high surge currents due to the mismatch of the output voltage of the LED driver, and the designed voltage of the LED board. These high surge current may assert the protection circuit within the LED driver or may cause permanent damage to the LED driver, and/or LED board.

Publication US9306387B2 discloses a system of the prior art.

### SUMMARY OF THE INVENTION

It is an objective of the invention to provide a protection circuit that allows hot swapping of a load without a risk of damaging the load when connected to a power source.

To overcome this concern, in a first aspect of the invention, a lighting system for protecting a load is provided. The lighting system comprises:
a switched mode power supply, SMPS, adapted to provide a regulated current to an input node;
a load;
a protection circuit for protecting the load, the protection circuit comprising :
   - the input node adapted to be coupled to the switched mode power supply;
   - a bleeder coupled between the input node and a return node;
   - a first output node adapted to be coupled to the input and a load;
   - a second output node adapted to be coupled to the load, wherein the load is couplable between the first output node and the second output node;
   - an impedance coupled between the second output node and the return node;
   - a switch coupled in parallel with the impedance, and
   - a controller adapted to control the switch and the bleeder,
wherein the controller is adapted to activate the bleeder and open the switch when a voltage across the impedance is above a threshold and wherein the controller is adapted to deactivate the bleeder and close the switch when the voltage across the impedance is below the threshold.

The protection circuit has an input node that can be coupled to a driver. The protection circuit may be directly coupled to an output of the switched mode power supply, SMPS, using the input node. A bleeder is coupled between the input node and a return node. The bleeder is used to provide a path for a current provided by the SMPS to flow back to the SMPS. A first output node is coupled to the input node and allows a load to be connected to the protection circuit. A second output node is provided which is also coupled to the load. The load may be coupled between the first output node and the second output node. An impedance is coupled between the second output node and the return node. In parallel to this impedance, a switch is provided. The switch is capable of shunting the impedance. A controller is used to control the switch and the bleeder. The controller may receive a feedback signal from the impedance in the form of a voltage across the impedance.

If not disconnected from a power source, the SMPS continues to operate. When the load is disconnected, a current that is to be provided to the load cannot flow anymore, resulting in a voltage at the output of the SMPS, and therefore also at the first output node, to increase. The SMPS is protected against a too high voltage and will limit the voltage to a level that is above the normal operating voltage. Connecting a load directly to this higher voltage will result in a current surge to flow through the load, potentially damaging the load. If the voltage across the impedance is above a threshold, the current through the load is considered too high for the shunt switch to be closed. Closing the shunt switch would result in an even higher current, which may damage the load. When the voltage across the impedance is below the threshold, the current has fallen below a desired current level, where closing the switch will not cause a current too large to flow through the load. The controller therefore closes the switch and turn off the bleeder when the voltage across the impedance is below the threshold. The bleeder is then also turned off, since the function of the bleeder is not required anymore. The main function of the bleeder is to discharge any capacitances at the first output node such that the voltage at the first output node drops from the voltage level at the overvoltage protection to, or close to, the normal operating voltage. If the voltage across the impedance is above the threshold, the switch is open and the bleeder is turned on.

In a further example, the lighting system further comprises a voltage sensing circuit for sensing the voltage across the impedance.

Preferably, a voltage sensing circuit is used for sensing the voltage across the impedance. The voltage sensing circuit may be used to provide a feedback signal to the controller based on the sensed voltage across the impedance.

In a further example, the bleeder comprises a series arrangement of a resistor and a switching element.

A simple bleeder may have a switching element. This switching element may be controlled by the controller. The switching element is coupled in series with a resistor. The opening and closing allows the bleeder to form a current path from the input node to the return node.

In a further example, the impedance has a resistance of at least 1 kΩ.

Preferably, the resistance of the impedance is not too low. A too low resistance may cause the current through the load to be too large, even when the switch is open. A relatively large resistance of e.g. between 1 kΩ to 10 kΩ allows the current to be limited enough to not damage the load and provide a voltage across the impedance that can be sensed easily.

In another example, the resistance of the impedance is larger than a resistance of the load.

To allow the excess voltage provided by the SMPS to be reduced as fast as possible without a risk of damaging the load, it is desired that the impedance has a higher resistance than the load. This reduces the current through the load enough so that the surge current cannot harm the load.

In another example, an amplitude of current drawn by the bleeder is larger than an amplitude of current through the load.

Preferably, the bleeder draws most of the current so that the total current drawn allows the voltage at the input node of the protection circuit to be reduced to the normal voltage level as soon as possible.

In another example, the load is a lighting load.

Preferably, the load that is protected in the lighting system is the lighting load. The lighting load may be most susceptible to a current surge and therefore would benefit most from the proposed protection circuit.

In another example, the lighting load comprises a semiconductor light source.

The light source is preferably a semiconductor light source since these types of light sources are very energy efficient. Examples of desired semiconductor light sources are light emitting diodes, LEDs, laser diodes, LDs, and Vertical Cavity Surface-Emitting Lasers, VCSELs.

In another example, the load and the protection circuit are comprised on a first single printed circuit board, PCB and wherein the SMPS is comprised on a second different PCB.

The load and the protection circuit may be present on a single PCB. Replacing the load may then also result in replacing the protection circuit. The protection circuit can be matched with the load. In this case, the load and protection circuit always come together, ensuring that the load is always protected upon replacement.

In another example, the load is adapted to be replaced while keeping the SMPS in an operating mode.

Preferably, the load can be hot-swapped, while the driver is in an operating mode. The driver is arranged to provide a current to the first output node i.e. the load, even when the load is disconnected. This results in the increase of voltage at the first output node, providing a hazard for a load that is to be coupled between the first and second output node.

In another example, the SMPS is arranged to operate in an overvoltage protection mode during the replacement of the load.

When the driver is operating and cannot provide the current to a load, the voltage exceeds an overvoltage level. It is desired that the driver then operates in a voltage control mode to prevent the voltage at the input node of the protection circuit from rising even further. When the overvoltage problem has been solved, i.e. the load has been properly connected and the voltage has been returned to a normal operating voltage level, the driver may operate in a current regulation mode.

In another example, the protection circuit prevents any current to flow through the load when a voltage provided by the SMPS exceeds a threshold.

It may occur that the overvoltage level may exceed the voltage level such that it would cause the current to be too high so that even with the taken precautions, the load may get damaged. In this case, it is desired to have all current flow through the bleeder and not through the load. This may be done by including a further switch that is arranged for disconnecting the impedance so that no current can flow through the impedance and the switch. In this case, it may be desired that the voltage at the input node is sensed and provided to the controller. If the voltage drops below the overvoltage threshold, the impedance may be connected again and the voltage across the impedance can be used as a feedback signal for the controller.

In another example, the bleeder remains inactive as long as the load is disconnected from the SMPS.

Turning off the bleeder when the load is disconnected will prevent any unnecessary power losses to occur. The load is not connected but the driver will still provide a voltage to the input node of the protection circuit. Therefore, if the bleeder would be active, the bleeder would introduce losses while not serving any purpose. The bleeder is mainly effective when a load is connected to the active driver.

### BRIEF DESCRIPTION OF THE DRAWINGS

Examples of the invention will now be described with reference to the accompanying drawings, in which:
Fig. 1 shows an example of an electric circuit diagram of a lighting system.
Fig. 2a shows an example of a graph of the voltage at the input node and the load current.
Fig. 2b shows an example of a graph of the current provided by the SMPS over time.
Fig. 2c shows an example of a graph of the bleeder current over time.
Fig. 3a shows an example of a graph of the voltage at the input node and the load current at start-up.
Fig. 3b shows an example of a graph of the current provided by the SMPS at start-up.
Fig. 3c shows an example of a graph of the bleeder current during start-up.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should also be understood that the Figures are merely schematic and are not drawn to scale. It should also be understood that the same reference numerals are used throughout the Figures to indicate the same or similar parts.

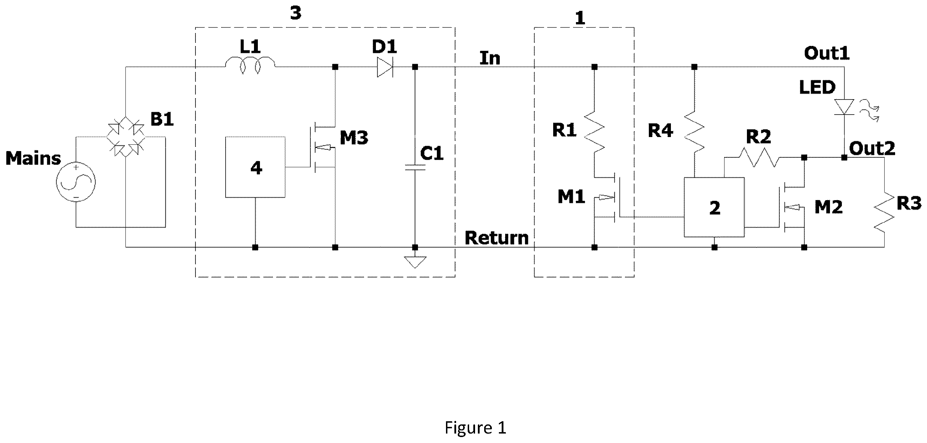

Figure 1 shows an exemplary circuit diagram of a lighting system, the lighting system has a protection circuit. The protection circuit has an input node. In that may be connected to an output of an SMPS 3. The protection circuit may have a bleeder 1 that may be used to provide a current path between the input node In and a return node Return. The bleeder 1 may have a resistor R1 coupled in series with a switching element M1. The switching element M1 may be any type of switching element allowing the resistor R1 to be coupled between the input node In and the return node Return. Preferably, the switching element M1 is a MOSFET or a bipolar transistor. The protection circuit may further have a controller 2 for controlling the bleeder 1. This may be done by providing a control signal from the controller 2 to the control gate of the switching element M1. The protection circuit may further comprise a first output node Out1 to which a load LED can be coupled. A second output node Out2 may be provided to also couple to the load LED, such that the load LED is coupled between the first output node and the second output node Out2. The second output node Out2 is further coupled to a switch M2 and an impedance R3. Similar to the switching element M1, the switch M2 is a MOSFET or a bipolar transistor. The switch M2 and the impedance R3 are placed in parallel with each other. The switch M2 and the impedance R3 may be coupled on the other side to the return node Return. The controller 2 may control the switch M2 by providing a control signal to the control gate of the switch M2.

In the example provided, the load LED is shown as a light emitting diode load. The load LED can be any kind of load that may be susceptible to a current surge and furthermore may be replaced from the SMPS 3 by hot-swapping. An LED may suffer from a current surge when directly connecting to an active SMPS 3. The LED die itself may get damaged, effectively reducing the lifetime of the LED. Other lighting loads, such as laser diodes or lasers are even more susceptible to a current surge. Other devices besides lighting loads may also be susceptible to a current surge. The controller 2 is arranged to control the bleeder 1 and the switch M2 based on a voltage across the impedance R3. Preferably, a voltage sensing circuit R2 is provided for sensing the voltage across the impedance R3. The voltage sensing circuit R2 is shown as a single resistor placed between the second output node Out2. The voltage sensing circuit R2 may output a feedback signal to the controller 2. Other examples of voltage sensing circuits may be possible. It may for example be needed that the voltage sensed at the impedance R3 needs to be lowered for the controller 2 to be able to receive a proper feedback signal. Another option may be to introduce a galvanic isolation, where an optocoupler may be used. The voltage sensed across the impedance R3 is a measure of the amplitude of the current flowing through the load LED and therefore also through the impedance. If the current through the impedance is above a defined current threshold, the voltage across the impedance R3 exceeds a voltage threshold. The current threshold may be set at a current above a nominal current that is set for the load LED. The voltage sensed across the impedance R3 may then exceed a voltage threshold so as to provide an indication that the current through the load LED is too high. The controller 2 may then decide to activate the bleeder 1 such that the current not only flows through the load LED but also the bleeder 1. The reason that the current is too high is that the voltage provided by the SMPS 3 is significant larger that the nominal voltage or forward voltage of the load LED. This may for example be because the load LED is disconnected from the SMPS 3. The SMPS 3 is arranged for providing a regulated current to its output and the input node of the protection circuit. In the examples provides, the SMPS 3 is shown as a boost converter, having an inductor L1, a switch M3 and a diode D1. A controller 4 is used for controlling the SMPS 3. The controller 4 may control the SMPS 3 based on a feedback signal of a voltage and/or a current provided to the input node In. A capacitor C1 may be applied to reduce a ripple of the voltage present at the output of the SMPS 3. If no load is provided to the SMPS 3, the current provided by the SMPS 3 is unbale to flow through the load and will flow through parasitic capacitance to ground and other capacitances to ground, such as capacitor C1. This will cause the voltage at the output of the SMPS 3 to rise without limit. To protect the circuitry from an overvoltage, the SMPS 3 is normally equipped with an overvoltage protection circuit. When the voltage increases above a protection threshold, the SMPS will regulate its output to remain to this voltage level as long as the open load connection remains. When a new, or the same, load LED is connected to the SMPS 3, a current may start to flow through the load LED. If no precautions are taken, the current through the load LED may exceed the maximum current rating of the load LED. The impedance R3 is provided in series with the load LED and is arranged such that the current through the load cannot exceed the maximum current rating of the load LED. The impedance R3 may for example have a resistance of at least 1 kΩ. The current will cause the voltage drop across the impedance R3, allowing the controller 2 to detect that the load has been connected or reconnected. The controller 2 will respond to this detection by enabling the bleeder 1. The activation of the bleeder will discharge the capacitor C1, or any other parasitic capacitance. The bleeder 1 may be arranged to draw a current that is larger than the nominal current of the load LED. This allows the bleeder 1 to ensure that the voltage at the input node In is lowered upon activation of the bleeder 1. When the voltage at the input node In reduces, the current through the load LED will also lower because the voltage will approach the nominal voltage level. The voltage across the impedance R3 will therefore also drop. The voltage across the impedance will eventually drop below the threshold. The controller 2 turns off the bleeder 1 when the voltage across the impedance R3 drops below the threshold. The voltage at the input node In has reached a safe operating voltage where there is no risk of a current surge though the load. To avoid any further losses, the impedance R3 may be shunted by the switch M2.

The protection circuit may be configured in different configurations. The protection circuit may be part of a driver. The driver may comprise the SMPS 3 and the protection circuit. The driver allows a safe hot-swap of the load LED to take place, while the SMPS 3 design does not require any modifications. The driver may also have a rectifier circuit B1 to provide a rectified DC voltage. The driver may be coupled to a mains voltage.

The protection circuit may also be placed close to the load LED. In the example of a lighting load, the protection circuit may be placed on the same PCB as the lighting load. The SMPS 3 may be part of a driver that powers the lighting load. The driver may a separate module. The protection circuit and the lighting load on a single PCB may be another separate module. The protection module and the lighting load may preferably be placed as a chips-on-board, COB module. The driver may be any driver that is currently available on the market and may not require any modifications. The single PCB with the lighting load and the protections circuit can be connected to the driver by an installer while the driver is operating in a safe manner. Because upon connection, the lighting load in series with the impedance R3 form the only conductive path for a current from the driver, a very low current is drawn by the driver and no arcing may occur between connection pins of the driver or the single PCB having the lighting load and the protection circuit. When the connection has been made and a current will flow through the impedance R3 and cause a voltage across the impedance R3 to exceed the threshold. The controller 2 will respond to this moment by activating the bleeder 1 and a larger current will be drawn from the SMPS 3.

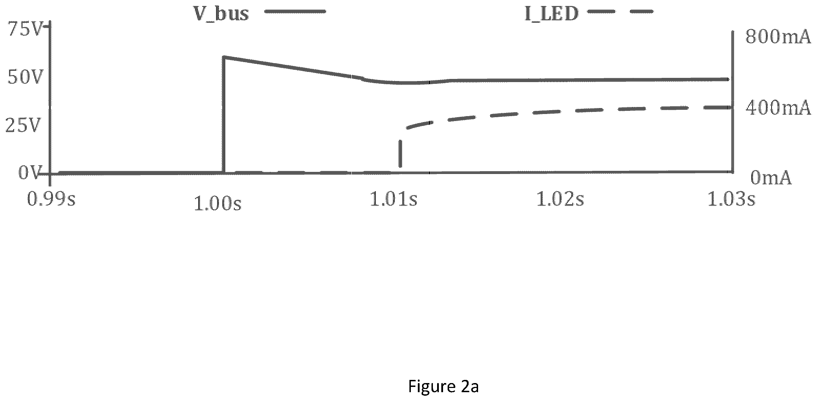

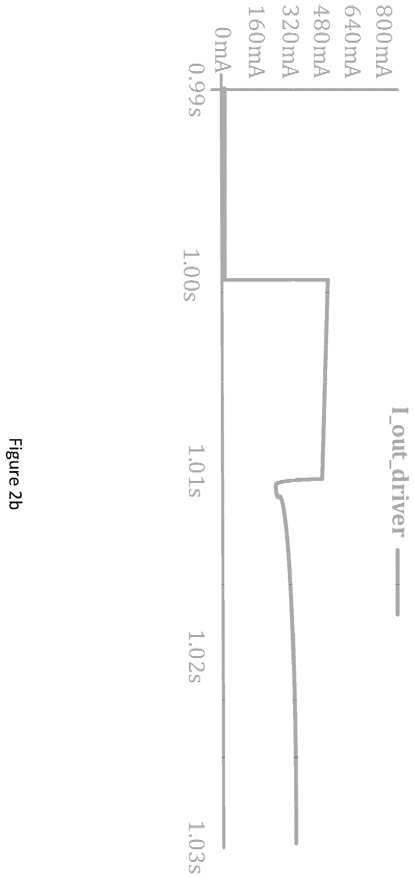

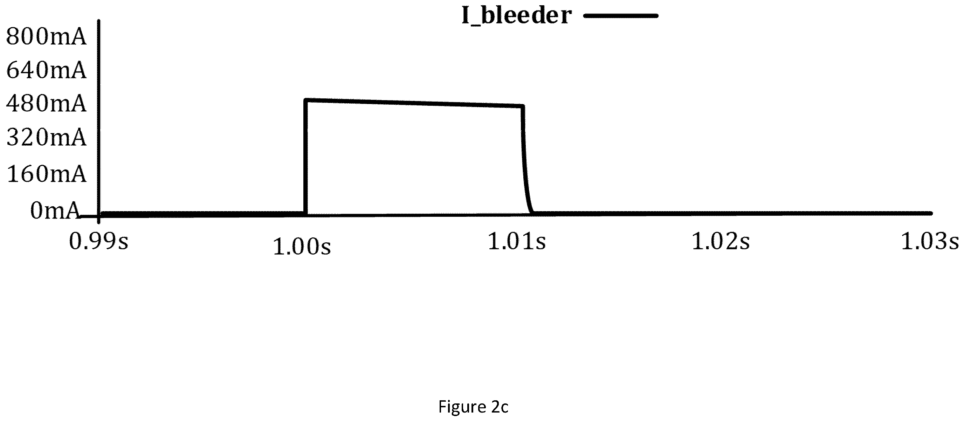

Figures 2a, 2b and 2c show an example of graphs showing the currents and voltage behaviours during a hot swapping event. The values for the voltage, current and time can be chosen arbitrary and may depend on the design of the system.

Figure 2a shows a graph of the bus voltage, the voltage at the input node In, over time when the protection circuit becomes active. Figure 2a also shows the current flowing through the load LED. The voltage at the input node 1 In at 1 second is at its maximum, which is approximately 60 V. This is the moment in time that a load LED is coupled to the output of the active SMPS 2. The bleeder 1 is activated at this moment of time by the controller 2. The current drawn by the bleeder 1 causes the voltage at the input node In1 to drop. This also results in a voltage drop across the impedance R3. The impedance R3 is chosen to be at a high resistive value, such that there is a very low current flowing through the load LED when the bleeder is active. This current is a fraction of the nominal load current and may remain below 1 mA. At 1.01 seconds, the voltage across the impedance R3 drops below the threshold, which occurs at a voltage at the input node. In at approximately 50 V. The controller 2 then turns off the bleeder 1 and activates the switch M2. With the impedance R3 shunted by switch M2, a larger current can flow through the load LED. In this example, the current through the load R3 will rise to approximately 400 mA.

Figure 2b shows the driver current, which is the current provided by the SMPS 3, when the protection circuit becomes active. At 1 second, the bleeder 1 becomes active since this is the moment in time that a load LED is coupled to the output of the active SMPS 3. The bleeder 1 is arranged to draw a current of approximately 480 mA. The SMPS 3 and capacitors at the input node In provide this current. The SMPS 3 may not be able to provide such a large current so the remaining current will be provided from the capacitors at the input node In. This results in the voltage at the input node In to drop, which can be seen in Figure 2a. The controller 2 keeps the bleeder 1 active until the voltage across the impedance R3 drops below the threshold, which occurs at 1.01 seconds. After this moment in time, the controller 2 deactivates the bleeder and the current that is to be provided by the SMPS 3 and the capacitors at the input node In will go to zero. The current does not actually go to zero because the controller 2 also closes the switch M2. Therefore, a current will flow through the load LED. The current amplitude that is provided to the load LED may correspond to the current that is provided by the SMPS 3. In this example, the current through the load is approximately 400 mA.

Figure 2c shows the bleeder current, which is drawn by the bleeder 1. The bleeder is turned on a 1 second, since this is the moment in time that a load LED is coupled to the output of the active SMPS 3. The current drawn by the bleeder may remain approximately constant or, as is shown in Figure 2c, may decline over time. At 1.01 seconds, the controller 2 turns off the bleeder 1 and no current will be drawn anymore by the bleeder 1.

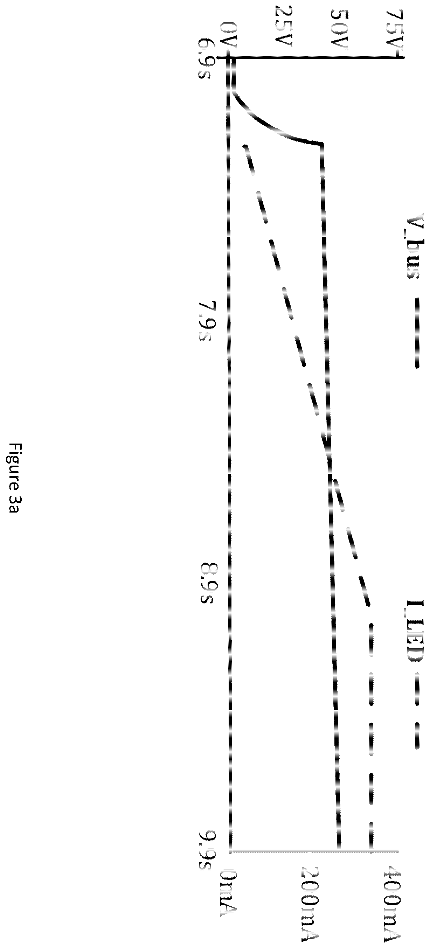

Figure 3a shows a graph of the bus voltage, the voltage at the input node In, over time when the SMPS 3 starts up with a load LED connected. At 6.9 seconds, the SMPS 3 starts up and provides the voltage V_bus to the input node In. in the example, the load LED is a lighting load, more specifically a semiconductor lighting load. The voltage at the input node In increases over time but remains below the forward voltage of the load LED. Since no current flows through the load LED and therefore the impedance R3 during the increase of the voltage at the input node In, the controller 2 will disable the bleeder 1 and close the switch M2. When the voltage at the input node reaches the forward voltage of the load LED, a current will start to flow. This occurs when the voltage at the input node In reaches approximately 50 V. The current through the load LED will rise to approximately 400 mA. The start-up of the SMPS 3 is assumed to be finished at 8.9 seconds.

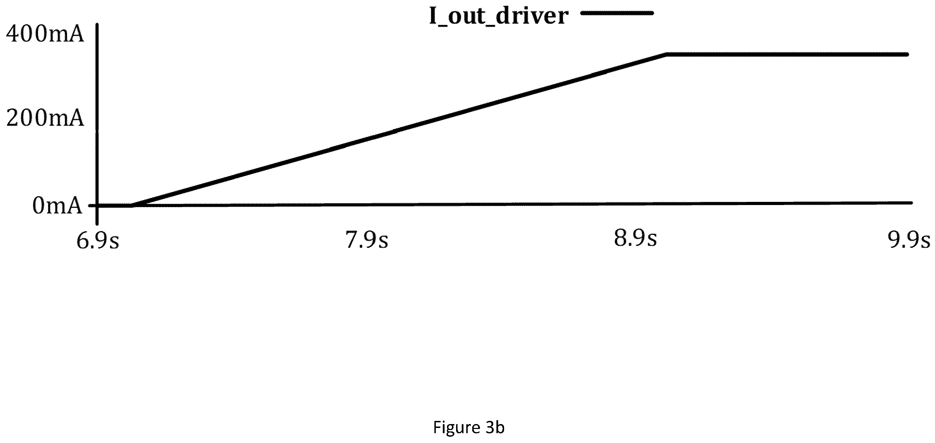

Figure 3b shows the current that is provided by the SMPS 3 over time to its output. During the start-up, taking place between 6.9 seconds and 8.9 seconds, the voltage at the output of the SMPS 3 rises quickly since the load is unable to draw a current as long as the voltage at the input node In is lower than the forward voltage of the load LED. Just after 6.9 seconds the voltage at the input node In has increased such that it exceeds the forward voltage of the load. The load LED begins to conduct and a current can be provided to the load LED by the SMPS 3. In the example provided, the current increases linearly as it is regulated by the SMPS 3. Alternatively, the current may increase in a different rate, e.g. logarithmic. The current keeps increasing until the current level has been reached that the SMPS 3 is designed to regulate the current to. In this example, the SMPS is designed to provide a current of approximately 400 mA.

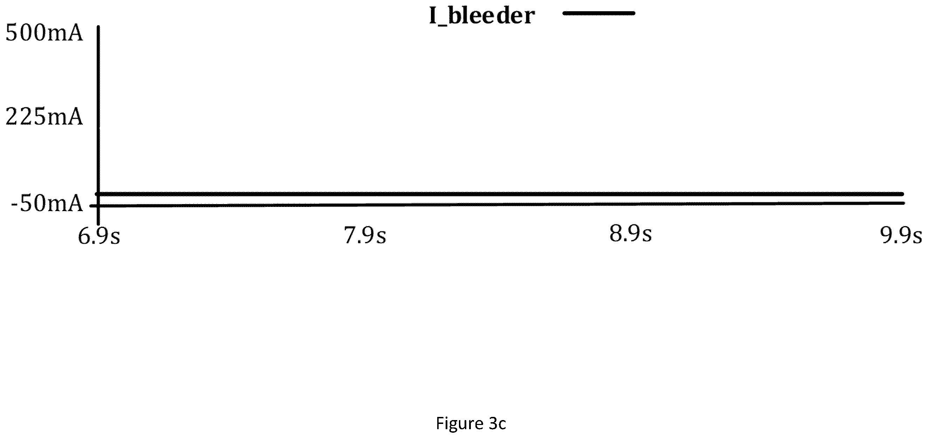

Figure 3c shows the bleeder current drawn by the bleeder 1 during the start-up of the SMPS 3. Preferably, the bleeder 1 is inactive throughout the start-up period of the SMPS 3 and therefore draws no current.

The impedance R3 may have a resistance that is low e.g. a sensing resistor in the order of mΩ or Ohms, or a resistance that is relatively large in the order of 100 Ω to several kΩ. The use of a low resistance may be desired to keep the voltage across the impedance within a preferred range. A higher impedance allows the impedance R3 to serve as a surge protection while also allowing a voltage within a desired range to be provided to the controller 2 or voltage sensing circuit R2.

## Claims

1. A lighting system comprising:
a switched mode power supply (3), SMPS, adapted to provide a regulated current to an input node (In);
a load (LED);
a protection circuit for protecting the load (LED), the protection circuit comprising:
- the input node (In) adapted to be coupled to the switched mode power suppy(3);
- a bleeder (1) coupled between the input node (In) and a return node (Return);
- a first output node (Out1) adapted to be coupled to the input node (In) and a load (LED);
- a second output node (Out2) adapted to be coupled to the load (LED), wherein the load (LED) is couplable between the first output node (Out1) and the second output node (Out2);
- an impedance (R3) coupled between the second output (Out2) and the return node (Return);
- a switch (M2) coupled in parallel with the impedance (R3), and
- a controller (2) adapted to control the switch (M2) and the bleeder (1),
wherein the controller (2) is adapted to activate the bleeder (1) and open the switch (M2) when a voltage across the impedance (R3) is above a threshold and wherein the controller (2) is adapted to deactivate the bleeder (1) and close the switch (M2) when the voltage across the impedance (R3) is below the threshold.

2. The lighting system according to claim 1 further comprising a voltage sensing circuit (R2) for sensing the voltage across the impedance (R3).

3. The lighting system circuit according to any of the preceding claims, wherein the bleeder (1) comprises a series arrangement of a resistor (R1) and a switching element (M1).

4. The lighting system according to any of the preceding claims, wherein the impedance (R3) has a resistance of at least 1 kΩ.

5. The lighting system according to any of the preceding claims, wherein a resistance of the impedance (R3) is larger than a resistance of the load (LED).

6. The lighting system according to any of the preceding claims, wherein an amplitude of a current drawn by the bleeder (1) is larger than an amplitude of current through the load (LED).

7. The lighting system according to any of the preceding claims, wherein the load (LED) is a lighting load.

8. The lighting system according to claim 7, wherein the lighting load comprises a semiconductor light source.

9. The lighting system according to any of the preceding claims, wherein the load (LED) and the protection circuit are comprised on a first single printed circuit board, PCB, and wherein the SMPS (3) is comprised on a second different PCB.

10. The lighting system according to any of the preceding claims, wherein the load (LED) is adapted to be replaced while keeping the SMPS (3) in an operating mode.

11. The lighting system according to the preceding claims, wherein the SMPS (3) is arranged to operate in an overvoltage protection mode during the replacement of the load (LED).

12. The lighting system according to any of the preceding claims, wherein the protection circuit prevents any current to flow through the load (LED) when a voltage provided by the SMPS (3) exceeds a threshold.

13. The lighting system according to any of the preceding claims, wherein the bleeder (1) remains inactive as long as the load (LED) is disconnected from the SMPS (3).

## Patentansprüche

1. Beleuchtungssystem, umfassend:
eine Schaltnetzteil-Leistungsversorgung (3), SMPS, die angepasst ist, um einen geregelten Strom an einen Eingangsknoten (In) bereitzustellen;
eine Last (LED);
eine Schutzschaltung zum Schützen der Last (LED), die Schutzschaltung umfassend:
- den Eingangsknoten (In), der angepasst ist, um an die Schaltnetzteil-Leistungsversorgung (3) gekoppelt zu werden;
- einen Ableiter (1), der zwischen dem Eingangsknoten (In) und einem Rücklaufknoten (Return) gekoppelt ist;
- einen ersten Ausgangsknoten (Out1), der angepasst ist, um an den Eingangsknoten (In) und eine Last (LED) gekoppelt zu werden;
- einen zweiten Ausgangsknoten (Out2), der angepasst ist, um an die Last (LED) gekoppelt zu werden, wobei die Last (LED) zwischen dem ersten Ausgangsknoten (Out1) und dem zweiten Ausgangsknoten (Out2) koppelbar ist;
- eine Impedanz (R3), die zwischen den zweiten Ausgang (Out2) und den Rücklaufknoten (Return) gekoppelt ist;
- einen Schalter (M2), der parallel zu der Impedanz (R3) gekoppelt ist, und
- eine Steuerung (2), die angepasst ist, um den Schalter (M2) und den Ableiter (1) zu steuern,
wobei die Steuerung (2) angepasst ist, um den Ableiter (1) zu aktivieren und den Schalter (M2) zu öffnen, wenn eine Spannung über der Impedanz (R3) oberhalb eines Schwellenwerts liegt, und wobei die Steuerung (2) angepasst ist, um den Ableiter (1) zu deaktivieren und den Schalter (M2) zu schließen, wenn die Spannung über der Impedanz (R3) unterhalb des Schwellenwerts liegt.

2. Beleuchtungssystem nach Anspruch 1, ferner umfassend eine Spannungserfassungsschaltung (R2) zum Erfassen der Spannung über der Impedanz (R3).

3. Beleuchtungssystemschaltung nach einem der vorstehenden Ansprüche, wobei der Ableiter (1) eine Reihenanordnung eines Widerstands (R1) und eines Schaltelements (M1) umfasst.

4. Beleuchtungssystem nach einem der vorstehenden Ansprüche, wobei die Impedanz (R3) einen Widerstand von mindestens 1 kΩ aufweist.

5. Beleuchtungssystem nach einem der vorstehenden Ansprüche, wobei ein Widerstand der Impedanz (R3) größer als ein Widerstand der Last (LED) ist.

6. Beleuchtungssystem nach einem der vorstehenden Ansprüche, wobei eine Amplitude eines Stroms, der durch den Ableiter (1) gezogen wird, größer als eine Amplitude des Stroms durch die Last (LED) ist.

7. Beleuchtungssystem nach einem der vorstehenden Ansprüche, wobei die Last (LED) eine Beleuchtungslast ist.

8. Beleuchtungssystem nach Anspruch 7, wobei die Beleuchtungslast eine Halbleiterlichtquelle umfasst.

9. Beleuchtungssystem nach einem der vorstehenden Ansprüche, wobei die Last (LED) und die Schutzschaltung auf einer ersten einzelnen Leiterplatte, PCB, umfasst sind, und wobei die SMPS (3) auf einer zweiten unterschiedlichen PCB umfasst ist.

10. Beleuchtungssystem nach einem der vorstehenden Ansprüche, wobei die Last (LED) angepasst ist, um ersetzt zu werden, während die SMPS (3) in einem Betriebsmodus gehalten wird.

11. Beleuchtungssystem nach den vorstehenden Ansprüchen, wobei die SMPS (3) angeordnet ist, um in einem Überspannungsschutzmodus während des Ersetzens der Last (LED) betrieben zu werden.

12. Beleuchtungssystem nach einem der vorstehenden Ansprüche, wobei die Schutzschaltung verhindert, dass beliebiger Strom durch die Last (LED) fließt, wenn eine Spannung, die durch die SMPS (3) bereitgestellt wird, einen Schwellenwert überschreitet.

13. Beleuchtungssystem nach einem der vorstehenden Ansprüche, wobei der Ableiter (1) inaktiv bleibt, solange die Last (LED) von der SMPS (3) getrennt ist.

## Revendications

1. Système d'éclairage comprenant :
une alimentation électrique à découpage (3), SMPS, conçue pour fournir un courant régulé à un nœud d'entrée (In) ;
une charge (DEL) ;
un circuit de protection pour protéger la charge (DEL), le circuit de protection comprenant :
- le nœud d'entrée (In) conçu pour être couplé à l'alimentation électrique à mode commuté (3) ;
- un purgeur (1) accouplé entre le nœud d'entrée (In) et un nœud de retour (Return) ;
- un premier nœud de sortie (Out1) conçu pour être couplé au nœud d'entrée (In) et à une charge (DEL) ;
- un second nœud de sortie (Out2) conçu pour être couplé à la charge (DEL), dans lequel la charge (DEL) peut être couplée entre le premier nœud de sortie (Out1) et le second nœud de sortie (Out2) ;
- une impédance (R3) couplée entre la seconde sortie (Out2) et le nœud de retour (Return) ;
- un commutateur (M2) couplé en parallèle à l'impédance (R3), et
- un dispositif de commande (2) adapté pour commander le commutateur (M2) et la purge (1),
dans lequel le dispositif de commande (2) est conçu pour activer le purgeur (1) et ouvrir le commutateur (M2) lorsqu'une tension à travers l'impédance (R3) est supérieure à un seuil, et dans lequel le dispositif de commande (2) est conçu pour désactiver le purgeur (1) et fermer le commutateur (M2) lorsque la tension à travers l'impédance (R3) est inférieure au seuil.

2. Système d'éclairage selon la revendication 1, comprenant en outre un circuit de détection de tension (R2) pour détecter la tension à travers l'impédance (R3).

3. Circuit de système d'éclairage selon l'une quelconque des revendications précédentes, dans lequel le purgeur (1) comprend un agencement en série d'une résistance (R1) et d'un élément de commutation (M1).

4. Système d'éclairage selon l'une quelconque des revendications précédentes, dans lequel l'impédance (R3) a une résistance d'au moins 1 kΩ.

5. Système d'éclairage selon l'une quelconque des revendications précédentes, dans lequel une résistance de l'impédance (R3) est supérieure à une résistance de la charge (DEL).

6. Système d'éclairage selon l'une quelconque des revendications précédentes, dans lequel une amplitude d'un courant tiré par la purgeuse (1) est supérieure à une amplitude de courant à travers la charge (DEL).

7. Système d'éclairage selon l'une quelconque des revendications précédentes, dans lequel la charge (DEL) est une charge d'éclairage.

8. Système d'éclairage selon la revendication 7, dans lequel la charge d'éclairage comprend une source de lumière à semi-conducteur.

9. Système d'éclairage selon l'une quelconque des revendications précédentes, dans lequel la charge (DEL) et le circuit de protection sont compris sur une première carte de circuit imprimé, PCB, unique et dans lequel le SMPS (3) est compris sur une seconde PCB différente.

10. Système d'éclairage selon l'une quelconque des revendications précédentes, dans lequel la charge (DEL) est adaptée pour être remplacée tout en maintenant le SMPS (3) dans un mode de fonctionnement.

11. Système d'éclairage selon les revendications précédentes, dans lequel le SMPS (3) est agencé pour fonctionner dans un mode de protection contre les surtensions pendant le remplacement de la charge (DEL).

12. Système d'éclairage selon l'une quelconque des revendications précédentes, dans lequel le circuit de protection empêche un quelconque courant de circuler à travers la charge (DEL) lorsqu'une tension fournie par le SMPS (3) dépasse un seuil.

13. Système d'éclairage selon l'une quelconque des revendications précédentes, dans lequel le purgeur (1) reste inactif tant que la charge (DEL) est déconnectée de la SMPS (3).
